# EUROPÄISCHE PATENTSCHRIFT

(11) **EP 3 048 326 B1**
(45) Veröffentlichungstag und Bekanntmachung des Hinweises auf die Patenterteilung: **07.07.2021**
(21) Anmeldenummer: 16150560.7
(22) Anmeldetag: 08.01.2016
(51) Int. Cl.: F16F 7/10, F03D 80/00, F03D 80/80

(54) **SCHWINGUNGSDÄMPFER FÜR EINE WINDENERGIEANLAGE, VERFAHREN ZUM EINBAU EINES SCHWINGUNGSDÄMPFERS IN EINEN TURM EINER WINDENERGIEANLAGE UND WINDENERGIEANLAGE**
VIBRATION DAMPER FOR A WIND TURBINE, METHOD FOR INSTALLING A VIBRATION DAMPER IN A TOWER OF A WIND ENERGY SYSTEM AND WIND ENERGY SYSTEM
AMORTISSEUR D'OSCILLATIONS POUR UNE EOLIENNE, PROCEDE DE MONTAGE D'UN AMORTISSEUR D'OSCILLATIONS DANS UNE TOUR D'UNE EOLIENNE ET EOLIENNE

(30) Priorität: 26.01.2015 DE 102015000789
(43) Veröffentlichungstag der Anmeldung: 27.07.2016
(73) Patentinhaber: Siemens Gamesa Renewable Energy Service GmbH, 22297 Hamburg (DE)
(72) Erfinder: SEIDEL, Marc, 49082 Osnabrück (DE); KLUIBENSCHEDL, Andreas, 6410 Telfs (AT); REITERER, Michael, 1030 Wien (AT)
(74) Vertreter: Wallinger Ricker Schlotter Tostmann

(56) Entgegenhaltungen:
- EP-A2- 1 677 003
- WO-A1-2006/062390
- JP-A- H01 240 482
- JP-A- 2003 176 774
- US-A1- 2010 200 348
- None

## Beschreibung

Die Erfindung betrifft einen Schwingungsdämpfer für eine Windenergieanlage mit einem auf einem Turm der Windenergieanlage angeordneten Maschinenhaus und einem Rotor mit wenigstens einem Rotorblatt, wobei der Schwingungsdämpfer wenigstens einen im Wesentlichen "U"-förmigen Tuned Liquid Column Dämpfer (TLCD) mit Steigrohren und einem Horizontalrohr zur Aufnahme einer Flüssigkeit aufweist. Die Erfindung betrifft ferner Verfahren zum Einbau eines Schwingungsdämpfers in einen Turm einer Windenergieanlage sowie eine Windenergieanlage.

Moderne Windenergieanlagen umfassen einen hohen Turm mit einer vertikalen Längsachse, häufig bestehend aus mehreren Turmsektionen, an dessen Spitze ein Maschinenhaus bzw. eine Gondel mit einem Rotor mit mehreren Rotorblättern und einer horizontalen Rotorachse um die Turmachse drehbar gelagert ist.

Bei Windenergieanlagentürmen handelt es sich um stark schwingungsanfällige Bauteile. Ein freistehender Turm ohne Gondel weist hierbei eine deutlich höhere Eigenfrequenz auf als ein Turm mit einem an der Spitze angeordneten Maschinenhaus und Rotor. Während der Errichtung einer Windenergieanlage bedeutet dies, dass ein freistehender und gondelloser Turm bzw. Turmrohbau, der an seiner Spitze noch nicht mit dem Gewicht des Maschinenhauses belastet ist, mit einer höheren Frequenz schwingt als nach dem Aufsetzen des Maschinenhauses.

Jede Struktur, so auch eine Windenergieanlage oder ein Windenergieanlagenturm, reagiert auf äußere Anregung, bspw. durch Wind oder Wellen, in einer bestimmten Frequenz mit eigenen Schwingungen, abhängig von der Frequenz der Anregung. Zudem hat jede Struktur sogenannte Eigenfrequenzen. Dies sind die Frequenzen, in denen das System schwingt, wenn es ausgelenkt und dann sich selbst überlassen wird. Für Windenergieanlagen relevant ist insbesondere die erste Eigenfrequenz, deren zugehörige erste Eigenform im Wesentlichen aus einer Biegeverformung des Turmes besteht. Sie wird daher auch "erste Biegeeigenfrequenz" genannt. Die zugehörige Eigenform ist die "erste Biegeeigenform". Diese Frequenz verändert sich, wenn weitere Bauteile hinzukommen, bspw. ein Windenergieanlagenturm höher wird. Sie ist also erheblich vom Bauzustand abhängig.

Im Rahmen der vorliegenden Erfindung umfasst der Begriff der Eigenfrequenz im jeweiligen Zusammenhang die Eigenfrequenz eines Windenergieanlagenturms an sich bzw. die Eigenfrequenz einer Kombination von Turm und (Hilfs-) Fundament bzw. Einspannung, also im Wesentlich die Eigenfrequenz des einseitig eingespannten bzw. befestigten Turms.

Kritisch wird eine Schwingungsanregung besonders dann, wenn sie sich im Frequenzbereich mit der Eigenfrequenz der Struktur überlagert und so zu Resonanzschwingungen führt, die die Struktur zerstören können.

Die erste Biegeeigenfrequenz, also die Frequenz der ersten Biegemode der Windenergieanlage, liegt in der Praxis in der Regel im Bereich von 0,1 bis 0,3 Hz, bei neueren und größeren Anlagen, speziell solchen für den offshore-Einsatz, auch am unteren Randbereich. Turmschwingungen werden auf unterschiedlichem Wege angeregt, u. a. von Schwankungen der Windlast auf den Rotor, dem Durchgang der Rotorblätter in ihrer untersten Position vor dem Turm, Wellengang oder, speziell im Rohbauzustand ohne aufgesetztes Maschinenhaus, durch sogenannte wirbelerregte Querschwingungen (WEQ bzw. "vortex induced vibrations" - VIV). Hierbei handelt es sich um eine Folge von Wirbelablösungen, die sogenannten Karman'schen Wirbel, des den Turm umströmenden Windes bzw. Windfeldes, abwechselnd auf der in Windrichtung gesehen linken und rechten Seite des Turms. Die Schwingung des Turms und die Wirbelablösungen verstärken sich gegenseitig.

Grundsätzlich sind die Eigenfrequenzen der gondellosen Türme höher als die vollständig montierter Anlagen. Es existieren dann Bedingungen, bei denen Anregungen durch Karman'sche Wirbel bei häufig vorkommenden Windgeschwindigkeiten WEQ induzieren. Entsprechend werden die Amplituden der Schwingungen größer, so dass die mechanischen und strukturellen Belastungen auf die Windenergieanlagentürme entsprechend wachsen.

Die kritische Windgeschwindigkeit, bei denen wirbelerregte Querschwingungen des Turmrohbaus gefährlich sind, liegt für einen komplett errichteten Turm ohne Gondel, abhängig von seiner Höhe und seiner Steifigkeit, üblicherweise zwischen 10 m/s und 25 m/s, weshalb eine Errichtung unzulässig ist, wenn diese Windgeschwindigkeiten erwartet werden und nicht direkt die Gondel nach dem Hub des letzten Turmschusses gezogen werden kann. Typische Schwingungsfrequenzen des Turms im Rohbauzustand sind einen Faktor 2 bis 5 höher als im Endzustand, etwa zwischen 0,2 und 1 Hz.

Die vorliegend verwendeten Begriffe der Dämpfungsfrequenz und der Eigenfrequenz haben im Rahmen der vorliegenden Patentanmeldung die folgenden Bedeutungen. Schwingende Körper, wie beispielsweise ein unbelasteter Turm oder eine Windenergieanlage ohne Schwingungsdämpfer, haben für verschiedene Biegemoden bzw. Biegeeigenformen verschiedene Eigenfrequenzen. Die erste Biegeeigenform eines vertikal aufgerichteten, an seinem unteren Ende befestigten Turms hat keine Schwingungsknoten, während höhere Biegeeigenformen ein, zwei oder mehr Schwingungsknoten aufweisen. Diese weisen zunehmend höhere Eigenfrequenzen auf und werden in der Realität mit steigender Ordnungszahl immer weniger angeregt. Technisch am bedeutsamsten ist die erste Biegeeigenmode, die die niedrigste Eigenfrequenz aufweist und daher im Rahmen der vorliegenden Anmeldung Grundschwingungsfrequenz genannt wird.

Ein Schwingungsdämpfer hat seine eigenen Eigenfrequenzen. Die, vorzugsweise erste bzw. unterste Eigenfrequenz der Schwingung des Schwingungsdämpfers wird vorzugsweise gleich oder nahe der Grundschwingungsfrequenz des Turms, also der Eigenfrequenz der ersten Biegeeigenform des Turms, gewählt.

Die Dämpfungsfrequenz ist hingegen eine Eigenschaft des gekoppelten Systems Turm und Schwingungsdämpfer. Im gekoppelten System ergibt sich ein Dämpfungsspektrum mit einer maximalen Dämpfung bei einer bestimmten Frequenz und einer oberhalb und unterhalb dieser Frequenz maximaler Dämpfung abnehmenden Dämpfung. Die Frequenz der maximalen Dämpfung wird im Rahmen der vorliegenden Anmeldung Dämpfungsfrequenz genannt. Dieses gekoppelte System hat eigene Eigenfrequenzen, u.a. die Dämpfungsfrequenz, die nahe bei, aber nicht identisch mit den Eigenfrequenzen der ungekoppelten Bestandteile sind. Ein in einen Turm eingebauter Schwingungsdämpfer schwingt daher bei maximaler Dämpfung nicht mit seiner eigenen Eigenfrequenz.

In besonderem Maße bei den neueren, offshore eingesetzten, Windenergieanlagen mit hoher Nennleistung ist die zu erwartende Belastung des Turms über die Lebensdauer der Windenergieanlage noch einmal deutlich höher als bei Onshore-Windenergieanlagen. Die sehr hohen Massen, die bei solchen Windenergieanlagen an der Turmspitze angeordnet sind, bedeuten eine sehr große schwingende Masse. Zu dem starken Wind offshore kommt die Anregung von Schwingungen der Windenergieanlage durch Wellengang hinzu. Maßnahmen zur zusätzlichen Schwingungsdämpfung bzw. Schwingungstilgung sind daher wünschenswert.

Es sind mehrere Schwingungsdämpfungs- bzw. -tilgungskonzepte in Windenergieanlagen bekannt. Gemeinsam ist ihnen, dass jeweils ein Tilgungselement nur im Turm der Windenergieanlage angeordnet ist und keine Schwingungsdämpfung durch Dämpfung gegenüber einem feststehenden Fixpunkt erzeugt, sondern Schwingungsenergie aus Turmschwingungen in entgegen gerichtete eigene Schwingungen umleitet. Die im Rahmen der vorliegenden Anmeldung genannten Schwingungsdämpfer sind daher auch Schwingungstilger.

Mechanische Tilger bzw. Dämpfer sind beispielsweise Pendeldämpfer. Diese sind für niedrige Frequenzen wenig geeignet, da sie eine sehr lange Pendellänge haben müssen, die im Turm aufgrund von Plattformen und weiteren Einbauteilen kaum Platz hat. Weitere Konzepte beruhen auf der Verwendung von Feder-Masse-Dämpfern oder von Flüssigkeitsdämpfern.

In der Kategorie der Flüssigkeitsdämpfer ist aus WO 00/77394 A1 ein Schwappdämpfer mit einem flüssigkeitsgefüllten Container bekannt, in dem eine Flüssigkeit gegen die Turmschwingungsrichtung gerichtet "schwappt". Aufgrund der geringen Schwapphöhe bzw. Amplitude der Bewegung ist eine große Masse der Flüssigkeit erforderlich.

Eine alternative Art von Flüssigkeitsdämpfern sind sogenannte "Tuned Liquid Column Dampers" (TLCD). Hierbei handelt es sich um eine im Wesentlichen "U"-förmige Röhre, die teilweise mit einer Flüssigkeit, beispielsweise Wasser oder Salzwasser, gefüllt ist. Die im TLCD ebenfalls "U"-förmig gebogene Flüssigkeitssäule schwingt zwischen den beiden aufrechten oder teilweise aufrechten Enden der Röhre hin und her, wobei die Schwingungsfrequenz wesentlich von der Länge der gesamten im Wesentlichen U-förmigen Wassersäule bzw. einer Stromlinie abhängt. Unter einer Stromlinie wird die üblicherweise Strecke, die ein Flüssigkeitspartikel in einer Strömung zurücklegt, verstanden. Im vorliegenden Fall einer schwingenden Wassersäule ist diese Definition modifiziert als eine Linie, entlang derer sich eine Reihe von Partikeln in der Schwingung hin- und herbewegen. Die so definierten Stromlinien reichen von einem Oberflächenpegel des einen Endes der im Wesentlichen U-förmigen Röhre über eine Horizontalrohr-Verbindung am Boden zum Oberflächenpegel am anderen Endes der Röhre. Aufgrund der größeren Höhe des Hubs der Flüssigkeitssäule gegenüber einem Schwappdämpfer wird bei weniger Masse eine vergleichbare Dämpfungswirkung erreicht. Ein entsprechender TLCD wird in WO 00/77394 A1 als weniger bevorzugte Variante ebenfalls erwähnt. In WO 2006/062390 A1 werden in genereller Weise TLCDs für Windenergieanlagen mit einigen Modifikationen vorgestellt.

TLCDs sind in der Praxis allerdings für den Einbau in Windenergieanlagen bislang noch nicht eingesetzt worden, da sie eine Form aufweisen, die sich nicht in einfacher Weise in den Aufbau eines Turms einer Windenergieanlage einfügen lassen. Aufgrund ihrer "U"-Form sind sie auch schwierig zu handhaben.

Entsprechende Liquid-Column-Dämpfer für Windenergieanlagen sind u.a. aus WO 2006/062390 A1 und EP 1 677 003 A2, bekannt. Weitere Liquid-Column-Dämpfer für andere Zwecke sind u.a. in US 2010/0200348 A1, JP H01240482 A und JP 2003 176774 A offenbart.

Der vorliegenden Erfindung liegt die Aufgabe zugrunde, einen geeigneten Schwingungsdämpfer für eine Windenergieanlage, ein Verfahren zum Einbau eines Schwingungsdämpfers in einen Turm einer Windenergieanlage und eine entsprechende Windenergieanlage zur Verfügung zu stellen, mit denen ein Einsatz eines TLCDs in einem Turm einer Windenergieanlage möglich wird.

Diese der Erfindung zugrunde liegende Aufgabe wird durch einen Schwingungsdämpfer für eine Windenergieanlage mit einem auf einem Turm der Windenergieanlage angeordneten Maschinenhaus und einem Rotor mit wenigstens einem Rotorblatt, wobei der Schwingungsdämpfer wenigstens einen im Wesentlichen "U"-förmigen Tuned Liquid Column Dämpfer (TLCD) mit Steigrohren und einem Horizontalrohr zur Aufnahme einer Flüssigkeit aufweist, gelöst, der dadurch weitergebildet ist, dass der TLCD aus mehreren Einzelteilen besteht, die in einem Turm einer Windenergieanlage zum TLCD zusammensetzbar oder zusammengesetzt sind, wobei jeweils zwei der Einzelteile des TLCDs jeweils ein Steigrohr umfassen, wobei als Rohrverbindungen mit Kupplungen ausgebildete Verbindungsmittel umfasst sind, mit denen die Einzelteile jedes TLCDs jeweils miteinander verbindbar oder verbunden sind.

Die erfindungsgemäße Aufteilung in Einzelteile ermöglicht es erstmals, den Einbau eines TLCD-Schwingungsdämpfers in einem Turm einer Windenergieanlage zu realisieren, und zwar entweder auf der Baustelle am Errichtungsort der WEA oder bereits bei der Herstellung des Turms oder des, beispielsweise obersten, Turmsegments. Damit ist es möglich, bei Ausnutzung eines max. Dämpfervolumens, wodurch die Steigrohre möglichst nah an der Turmwand platziert werden, die räumlichen Begrenzungen zu überwinden, die durch den Turmkopfflansch gesetzt werden.

Die Auslegung der TLCDs oder des TLCDs erfolgt vorzugsweise für eine Turm-Eigenfrequenz, auf die der Dämpfer abgestimmt wird.

Erfindungsgemäß sind die Verbindungsmittel als Rohrverbindungen mit Kupplungen ausgebildet. Rohrverbindungen mit Kupplungen sind besonders einfach zusammenzusetzen und bieten eine hohe Dichtigkeit und Langlebigkeit.

Vorzugsweise sind wenigstens zwei TLCDs umfasst, die insbesondere in einer gekreuzten Anordnung zueinander angeordnet sind, wobei insbesondere bei gekreuzten TLCDs ein TLCD um eine Differenzhöhe höher steht als ein anderer TLCDs, wobei insbesondere der höher stehende TLCD in einem unteren Bereich seiner Steigrohre ein, insbesondere mittels einer Bodenplatte mit Loch oder Löchern abgetrenntes, Standvolumen aufweist, das unterhalb einer Unterkante des Horizontalrohrs liegt. Eine gekreuzte Anordnung zweier TLCDs, vorzugsweise in einem Winkel von 90° zueinander, bedeutet, dass Turmschwingungen in jede Richtung durch Linearkombinationen der Schwingungen in den beiden gekreuzten TLCDs in gleicher Weise gedämpft bzw. getilgt werden. Es können auch drei oder mehr TLCDs eingesetzt werden, die gekreuzt angeordnet sind, also bei drei TLCDs beispielsweise unter Winkeln von 60° zueinander, bei vier TLCDs unter einem Winkel von 45° zueinander usw.

Die Differenzhöhe entspricht im Wesentlichen einem vertikalen Versatz aufgrund der einander kreuzenden horizontalen Rohre.

Da die Horizontalrohre, die die beiden Steigrohre jedes TLCDs miteinander verbinden, sich kreuzen, müssen sie in der Höhe gestaffelt geführt werden, so dass der schwingende Teil der Säule des "oberen" TLCDs höher angeordnet ist als derjenige der "unteren" TLCDs. Dadurch, dass der Behälter, der das Steigrohr des "oberen" TLCDs in dieser Konfiguration bildet, nach unten verlängert und mit Wasser gefüllt ist, wird das Dämpfergewicht durch die Wassersäule getragen und es ist keine aufwändige Unterkonstruktion notwendig.

In einer vorteilhaften Weiterbildung ist ein Horizontalrohr eines TLCDs als Einzelteil oder, ganz oder teilweise, als Teil eines oder beider Steigrohr-Einzelteile ausgebildet. So ist es entweder möglich, das Horizontalrohr als Einzelteil in den Turm einzubringen und mit den beiden Steigrohren zu verbinden, oder es ist als Teil eines Steigrohr-Einzelteils ausgebildet oder so unterteilt, dass es jeweils einen Teil der beiden Steigrohr-Einzelteile eines TLCDs bildet. Die Ausbildung als Einzelteil bietet den Vorteil der einfacheren Platzier barkeit. Wenn das Horizontalrohr bereits Teil eines Steigrohr-Einzelteils ist, hat dies den Vorteil, dass eine Verbindungsstelle eingespart wird.

Wenn in einer vorteilhaften Weiterbildung die Steigrohre als Behälter mit gebogener Rückwand ausgebildet sind, deren Biegung an eine Innenwand eines Turms einer Windenergieanlage angepasst ist, wobei insbesondere im eingesetzten Zustand ein Spalt zwischen der gebogenen Rückwand eines Behälters und der Innenseite des Turms verbleibt, der mit einer aushärtenden Befestigungsmasse verfüllbar ist oder verfüllt wird, ist eine besonders sichere und vollflächige Verbindung zwischen den Behältern der TLCDs und der Turmwand gegeben. Die Verfüllung findet beispielsweise als Ausschäumung oder Vergroutung des Spalts statt. Bei der Verwendung kreissegmentförmiger Behälter mit angepasst gebogener Rückwand hat dies den Vorteil, dass die Krafteinleitung der Dämpferkräfte in den Turm begünstigt wird. Bei der Masse kann es sich um einen hochfesten Beton handeln oder um ein teilelastisches Material, das langfristig vor Versprödung gesichert ist.

Die TLCDs sind vorzugsweise als jeweils geschlossene Systeme oder als gemeinsames geschlossenes System ausgebildet. Dies verhindert das Verdunsten von Flüssigkeit und den Eintritt von Sauerstoff, so dass Korrosion in den TLCDs langfristig vermieden wird. Dies begünstigt auch die langfristige bis völlige Wartungsfreiheit des Systems. Auch eine Ausführung mit einem Druckentlastungsventil wird in diesem Sinne als geschlossenes System verstanden. Das Druckentlastungsventil hat lediglich die Aufgabe, unter selten auftretenden Extrembelastungen eine Überlastung des TLCDs zu verhindern.

Die Ausbildung der Behälter mit gebogener Rückwand bedeutet auch, dass die äußeren Dimensionen des Schwingungsdämpfers, insbesondere sein Durchmesser, größer sind als der Durchmesser eines Turmkopfflansches, so dass die Montage in Einzelteilen in diesem Fall besonders begünstigt ist.

Vorzugsweise sind Luftvolumen in den Steigrohren eines TLCDs oder mehrerer TLCDs mit einem Verbindungsrohr miteinander verbunden, das insbesondere radial zum Turm geführt ist. Unter dem Begriff "radial zum Turm" wird hierbei verstanden, dass die Verbindungsrohre bei symmetrisch angeordneten Behältern durch das Zentrum oder nahe beim Zentrum des Turmquerschnitts verlaufen. Die Verbindungsrohre sind vorzugsweise bei allen eingesetzten TLCDs vorhanden, so dass ein möglichst gleichartiges Schwingungsverhalten in die verschiedenen Richtungen erreicht wird. Auch in Bezug auf die Dimensionen und weitere Eigenschaften der TLCDs sollten diese im Interesse eines möglichst gleichmäßigen und richtungsunabhängigen Schwingungsverhaltens gleichartig aufgebaut sein.

Die Steigrohre und das wenigstens eine Horizontalrohr des wenigstens einen TLCDs sind vorzugsweise in zwei oder mehrere parallele Kammern unterteilt, insbesondere mittels vollständig geschlossener Leitwände und/oder Schottbleche. Damit wird es möglich, beispielsweise durch Auswahl unterschiedlicher Füllhöhen in den beiden Kammern eines TLCDs unterschiedliche Eigenfrequenzen einzustellen und somit den Frequenzbereich, in dem eine Schwingungsdämpfung stattfindet, zu verbreitern. Die Leitwände bzw. Schottbleche können symmetrisch in der Mitte angeordnet werden, so dass zwei gleich große Kammern entstehen, oder versetzt von der Mitte, so dass zwei unterschiedlich große Kammern entstehen. Auf diese Weise kann beispielsweise unterschiedlich viel Masse in die beiden Kammern bei verschiedenen Frequenzen eingesetzt werden, so dass beispielsweise in der größeren Kammer eine stärker zu dämpfende Frequenz eingestellt wird und in der kleineren Kammer mit weniger Flüssigkeit eine zweite Frequenz, die nicht ganz so stark gedämpft werden muss. Die Leitwände und/oder Schottbleche unterteilen das Volumen des TLCDs vorzugsweise in zwei oder mehr vollständig voneinander getrennte Kammern, zwischen denen weder Flüssigkeits- noch Luftaustausch stattfindet. Die Unterteilung des Horizontalrohrs kann auch durch die Verwendung mehrerer getrennter paralleler Rohre erfolgen.

Vorzugsweise wird zur Einstellung einer Dämpfungsfrequenz eines TLCDs ein Luftfedereffekt einer Luftsäule in wenigstens einem Steigrohr des Schwingungsdämpfers verringert oder erhöht, insbesondere durch Öffnen oder Schließen eines Ventils im Steigrohr oder einer Absperrklappe in einem Verbindungsrohr. Der Luftfedereffekt entsteht dadurch, dass die Luftsäule über dem Flüssigkeitspegel im Steigrohr eingeschlossen ist und bei einem Schwingen der Flüssigkeitssäule im TLCD die Luftsäule oberhalb des Flüssigkeitspegels abwechselnd komprimiert und expandiert wird. In beiden Fällen übt die komprimierte bzw. expandierte Luft eine rücktreibende Kraft auf die Oberfläche der Wassersäule aus, wodurch sich die Schwingungsfrequenz der Wassersäule gegenüber einem offenen System erhöht, bei dem die Luftsäule nicht komprimiert und expandiert wird. Bei einer Absperrklappe in einem Verbindungsrohr zwischen den beiden Steigrohren werden durch das Schließen der Absperrklappe beide Luftsäulen abgeschlossen. Alternativ kann auch die Klappe so eingestellt werden, dass nur eine Luftsäule abgeschlossen wird, wodurch sich der Luftfedereffekt verringert. Ein Ventil, insbesondere Druckentlastungsventil bzw. Über- und/oder Unterdruckventil, kann ebenfalls das Luftfederverhalten beeinflussen.

Bevorzugt sind oder werden turbulenzverringernde Einbauteile in wenigstens einem TLCD eingesetzt, insbesondere Nasenelemente und/oder Strömungsanpassungselemente, insbesondere Ausrundungen oder Übergangsstücke zum Übergang von eckigen zu runden Querschnitten. Solche Einbauteile verhindern bzw. verringern das Entstehen von Turbulenzen in der schwingenden Flüssigkeit, die zu einer Energiedissipation und dazu führen, dass weniger Energie aus der Turmschwingung in die Schwingung der Flüssigkeitssäule im TLCD aufgenommen werden kann. Durch den Einbau bereits weniger Einbauteile ist es so außerdem möglich, die Dämpferfrequenz genau anzupassen.

Eine Frequenzabstimmung kann auch über eine passende Wahl der Querschnittsverhältnisse der Steigrohre zum horizontalen Rohr erfolgen, wobei vorzugsweise das horizontale Rohr halb so dick ist wie das vertikale Rohr oder weniger, gemessen am wirksamen Querschnitt.

Wenn eine Dämpfer-Plattform umfasst ist, die im Turm einer Windenergieanlage eingebaut oder einbaubar, insbesondere schweißbar, ist und das Gewicht des Schwingungsdämpfers aufnimmt, wobei die Dämpfer-Plattform insbesondere ein kreisringförmiges Flachprofil mit mehreren, insbesondere strahlenförmig radial angeordneten, Trägern mit Trägerprofil, insbesondere Schiffsbauprofil, aufweist , ist es möglich, den Schwingungsdämpfer auf die Dämpfer-Plattform zu setzen, die das Gewicht des Schwingungsdämpfers aufnimmt. Bei der Dämpfer-Plattform handelt es sich um eine eigene Plattformkonstruktion, die im Turm eingebaut wird und mit diesem zusammen beschichtet werden kann. Die vorzugsweise radial angeordneten Träger der Plattform sind Schiffsbauprofile, sogenannte "Holland-Profile" oder auch "HP-Profile", die sich besonders gut mitbeschichten lassen. Die Dämpfer-Plattform weist außerdem Durchbrechungen bzw. Öffnungen für Kabeldurchführungen und für Leiterdurchführungen auf.

Der Dämpfer steht fix im Turm und bewegt sich nicht mit dem Azimutwinkel des Maschinenhauses in Hauptwindrichtung oder Hauptwellenrichtung mit. Durch seine spezielle Geometrie in Kreuzbauweise oder in anderer geeigneter Anordnung ist der Dämpfer ausrichtungsunabhängig, d.h. es muss auch nicht bei der Errichtung des Windenergieanlagenturms auf eine spezielle Winkelausrichtung geachtet werden. Die Dämpfer-Plattform umfasst vorzugsweise hochgezogene Süllkanten, die die um die Plattformaussparungen, wie z.B. für eine Turmaufstiegsvorrichtung, angeordnet sind, um möglicherweise austretende Flüssigkeit auf der Plattform separat abfangen und über ein Rohrleitungssystem, beispielsweise Schläuche an der Turmwand, kontrolliert ableiten zu können. Eine geeignete Höhe der Süllkanten ist beispielsweise 1,20 m.

Vorzugsweise wird ein leerer Tank neben oder auf dem Fundament am Boden einer Windenergieanlage angeordnet, der bei einer möglichen Leckage des Flüssigkeitsdämpfers das gesamte auslaufende Flüssigkeitsvolumen auffangen kann.

Der erfindungsgemäße Schwingungsdämpfer wird mit einer Flüssigkeit, vorzugsweise mit einer Natriumchlorid-Lösung etwa bis zur Hälfte befüllt. Die Konzentration der Salzlauge liegt vorzugsweise zwischen 16 und 22 Gew.-%, zum Einsatz in Offshore-Windenergieanlagen auch darunter, insbesondere zwischen 10 und 22 Gew.-%. Konzentrierte Salzlauge, also Salzwasser, bietet die Vorteile, dass sie sowohl den Gefrierpunkt absenkt als auch die Dichte erhöht. Salzlauge ist günstig und unter Umweltaspekten unbedenklich.

Bei einem Turm von über 100 m Höhe ergibt sich für den Durchmesser etwas weniger als der Innendurchmesser des Turms, beispielsweise ca. 5,50 m, bei einer Behälterhöhe von ca. 4 m. Mannlöcher an der Oberseite der Steigrohr-Behälter ermöglichen vorzugsweise den Zugang in das Innere des Behälters, was insbesondere bei der Fertigung der Behälter sowie beim Anschweißen und Anschrauben von Innenbauteilen wichtig ist. Sowohl die Dämpfer-Plattform als auch der Schwingungsdämpfer selbst lässt vorzugsweise in der Mitte eine Öffnung zur Durchführung der Kabel, die aus dem Maschinenhaus zum Turmfuß und umgekehrt geführt sind.

Eine automatische Abriegelung des Dämpfers wird vorzugsweise dadurch erreicht, dass der Dämpfer sich unmittelbar vor zu hohen Amplituden dadurch schützt, dass eine auf der Wassersäule schwimmende Kugel sich in die Übergangsöffnung zum Luftrohr drückt, wofür gegebenenfalls ein Führungskäfig vorgesehen ist. Dadurch wird verhindert, dass Flüssigkeit in das Verbindungsrohr zwischen den Luftsäulen der beiden Steigrohre eindringt. Weiterhin bildet sich ein Luftfedereffekt aus, die die Schwingungsfrequenz des TLCD erhöht, indem die entsprechend der Form des TLCD gebogene Wassersäule zurückgetrieben wird. Diese Lösung ist mechanisch und damit unmittelbar regelnd. Es ist keine dauerhafte Absperrung über Sensorik etc. notwendig.

Der erfindungsgemäße Schwingungsdämpfer kann vorteilhafterweise auf ein aktives Tilgersystem erweitert werden, indem beispielsweise ein Gasdruckbehälter an die Leerrohre angeschlossen wird und ein geeigneter Regler Pegelstände oder Zeitpunkte definiert, wo Gas in die Leerrohre stoßartig eingeblasen wird. Die Flüssigkeitssäule wird dadurch stoßartig in Bewegung gesetzt und induziert einen geeigneten Gegenimpuls. Die Schwingungen des Turms können dadurch aktiv bekämpft werden.

Für besonders hohe zu erwartende Amplituden, beispielsweise in Stürmen, ist vorgesehen, eine Wasserturbine im horizontalen Rohr einzusetzen, mittels der die Eigenversorgung der Windenergieanlage, beispielsweise des Azimutantriebs, gewährleistet wird. Eine solche Wasserturbine kann entweder permanent oder nur bei Stillstand der Windenergieanlage im horizontalen Rohr angeordnet sein oder bei anderen Sonderbedingungen der Windenergieanlage in das horizontale Rohr eingefahren werden und ansonsten aus dem wirksamen Querschnitt des horizontalen Rohrs herausgefahren werden. Im herausgefahrenen Zustand schließt ein Deckel der Wasserturbine die Rohrwand vorzugsweise so ab, dass vorzugsweise eine glatte Wandung entsteht und keine Turbulenzen entstehen.

Die Steigrohr-Behälter umfassen vorzugsweise Entlüftungsbohrungen, die verschließbar sind, sowie Anschlüsse für Feuerwehrschläuche mit speziellen Kupplungen, die insbesondere neben Mannlöchern angeordnet sind und zur Befüllung mit der Flüssigkeit dienen. Druckentlastungsventile, beispielsweise neben den Mannlöchern, schützen den Behälter vor schädlichen Über- oder Unterdrücken. Eine solche Anpassung an verschiedene Stadien des Bauzustands eines Turms einer Windenergieanlage ist beispielsweise in einer deutschen Patentanmeldung der Anmelderin beschrieben, die den gleichen Anmeldetag wie die vorliegende Patentanmeldung aufweist und den Titel "Lastaufnahmemittel mit Schwingungsdämpfer und Verfahren zum Errichten einer Windenergieanlage" trägt.

In einer vorteilhaften Weiterbildung ist eine Sensorik umfasst, insbesondere Füllstandssensoren und/oder Pegelmesser zur Überwachung der Funktion des Schwingungsdämpfers. Solche Sensoren lassen sich in das Sensorsystem der Windenergieanlage, beispielsweise das SCADA-System, einbinden, beispielsweise zur Überwachung von Füllstand, Eigenfrequenz des Dämpfers und Amplituden.

Die der Erfindung zugrunde liegende Aufgabe wird auch durch ein Verfahren zum Einbau eines erfindungsgemäßen, zuvor beschriebenen Schwingungsdämpfers in einen Turm einer Windenergieanlage gelöst, wobei der Schwingungsdämpfer in Einzelteilen in den Turm transportiert und positioniert wird, wobei die Einzelteile im Turm mittels Rohrverbindungen und Kupplungen zu wenigstens einem TLCD zusammengesetzt und miteinander verbunden werden. Hierdurch werden die gleichen Vorteile verwirklicht wie durch den erfindungsgemäßen, zuvor beschriebenen Schwingungsdämpfer und es ist möglich, einen komplexen TLCD in den Turm einer Windenergieanlage einzubauen, dessen Außendurchmesser insbesondere größer ist als der Innendurchmesser eines Turmkopfflansches.

Nach dem Verbinden der Einzelteile miteinander zum wenigstens einen TLCD wird der wenigstens eine TLCD fest mit dem Turm verbunden, insbesondere durch Verfüllen von Spalten zwischen einer Turm-Innenwandfläche und Rückseiten der als Behälter ausgebildeten Steigrohre mit einer aushärtenden Verbindungsmasse. Hierdurch ist eine dauerhafte großflächige Einleitung der Schwingungen des Turms in den Schwingungsdämpfer und umgekehrt ermöglicht, was zu einer besonders guten Kopplung zwischen Turm und Schwingungskörper führt. Diese gute Kopplung ist wichtig für eine effiziente Schwingungsdämpfung bzw. Schwingungstilgung.

Wenn vorteilhafterweise vor dem Einsatz der Einzelteile eine Dämpfer-Plattform im Turm installiert wird, wobei zunächst ein umlaufender Auflagering am Turm eingeschweißt wird und nachfolgend die Dämpfer-Plattform von unten im Turm auf den Auflagering positioniert wird und, insbesondere mit Kehlnähten, am Auflagering verschweißt wird, wobei insbesondere die Dämpfer-Plattform mit dem Turm zusammen beschichtet wird, ist eine besonders sichere Befestigung des erfindungsgemäßen Schwingungsdämpfers im Turm der Windenergieanlage gewährleistet. Die Konstruktion und der Einbau des Schwingungsdämpfers im Turm können bereits in der Werkhalle bei der Fertigung des Turms oder der obersten Turmsektion erfolgen, wobei die Befüllung mit der schwingenden Flüssigkeit bevor zugt erst auf der Baustelle am Errichtungsort der Windenergieanlage, vorzugsweise im aufgerichteten Zustand erfolgt. Ebenso kann aber der Schwingungsdämpfer auch erst am Errichtungsort im Turm eingebaut werden. Die Dämpfer-Plattform wird vorzugsweise bereits in der Werkshalle eingebaut und mit dem Turm zusammen beschichtet. Die Dämpfer-Plattform dient ebenfalls der Kopplung der Schwingungen von Turm und Schwingungsdämpfer miteinander. Dafür weist die Dämpfer-Plattform vorzugsweise Befestigungsmittel zur Befestigung des Schwingungsdämpfers auf der Dämpfer-Plattform auf, die ein Verrutschen des Schwingungsdämpfers auf der Dämpfer-Plattform verhindern und Schwingungen des Schwingungsdämpfers an dem Turm und umgekehrt übermitteln.

Die großflächige Anbindung, beispielsweise Vergroutung, hat außerdem den Vorteil, dass die Kopplung zwischen Schwingungsdämpfer und Turm großflächig erfolgt und somit das Material des Turms nicht an einer kleinen Stelle stark belastet wird. Dies schont auch den Turm selbst.

Die der Erfindung zugrunde liegende Aufgabe wird ferner durch eine Windenergieanlage mit einem Turm, einem Maschinenhaus und einem Rotor mit wenigstens einem Rotorblatt gelöst, die dadurch weitergebildet ist, dass in einem oberen Bereich des Turms ein zuvor beschriebener erfindungsgemäßer Schwingungsdämpfer mit wenigstens einem TLCD angeordnet ist, der insbesondere in einem zuvor beschriebenen erfindungsgemäßen Verfahren eingebaut ist.

Auch die erfindungsgemäße Windenergieanlage weist die gleichen Merkmale, Eigenschaften und Vorteile auf wie die weiteren Erfindungsgegenstände, also der erfindungsgemäße Schwingungsdämpfer und das erfindungsgemäße Verfahren. Diese Gegenstände beziehen sich aufeinander und ergänzen einander.

In einer bevorzugten Ausführungsform weist der erfindungsgemäße Schwingungsdämpfer einen Außendurchmesser auf, der im Wesentlichen dem Turminnendurchmesser entspricht. Vorzugsweise beträgt der Außendurchmesser des Schwingungsdämpfer ca. 5,40m und weist eine Steigrohr-Breite von ca. 2,50m und eine Steigrohr-Höhe inkl. Verbindungsrohr-Anschluss von ca. 3,80m auf. Er fasst ein Flüssigkeitsvolumen von ca. 25m³ und weist ein Gewicht von ca. 40t (30t Salzwasser, 10t reines Dämpfergewicht) auf. Der Schwingungsdämpfer wird bevorzugt aus Stahlblech gefertigt und muss aufgrund der Befüllung mit Salzwasser von innen beschichtet werden. In einer besonders bevorzugten Ausführungsform ist der Dämpfer mit Anbaustutzen versehen und wird in diesem Zustand von innen beschichtet. Anschließend werden die o.g. turbulenzverringernden Einbauteile an den Anbaustutzen montiert, bevorzugt verschraubt. Dies weist den Vorteil auf, dass die Beschichtung ohne größere Einbauteile erheblich einfacher ist.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer erfindungsgemäßen Windenergieanlage,
- Fig. 2a), b): schematische Darstellungen erfindungsgemäß einsetzbarer Schwingungsdämpfer,
- Fig. 3a), b): schematische Darstellungen erfindungsgemäß einsetzbarer Schwingungsdämpfer mit weiteren Details,
- Fig. 4: eine schematische Darstellung einer Draufsicht auf einen erfindungsgemäßen Schwingungsdämpfer und
- Fig. 5a), b): schematische Darstellungen einer Dämpfer-Plattform.

In den Zeichnungen sind jeweils gleiche oder gleichartige Elemente und/oder Teile mit denselben Bezugsziffern versehen, so dass von einer erneuten Vorstellung jeweils abgesehen wird.

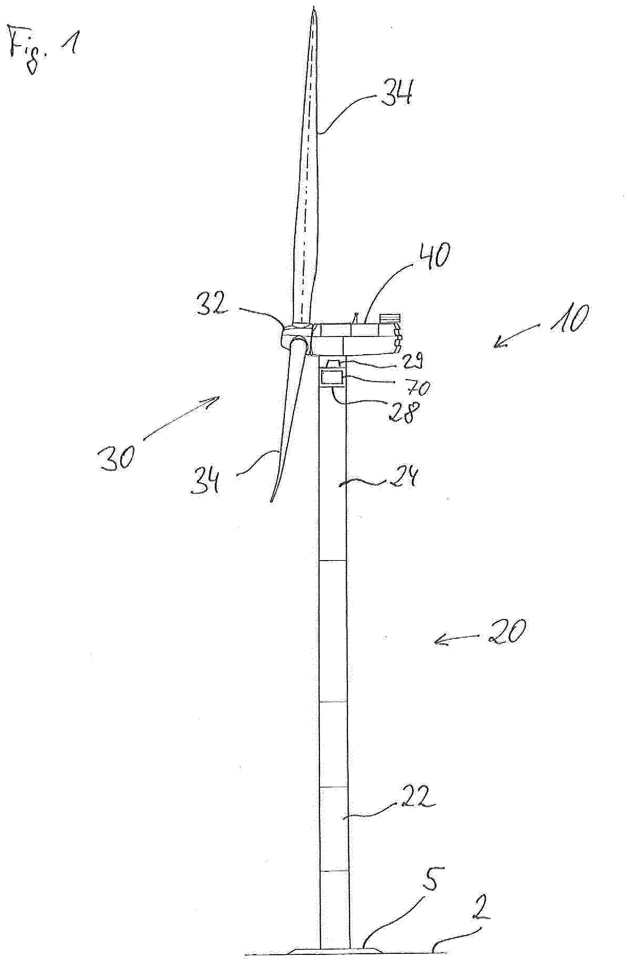

Fig. 1 zeigt eine gattungsgemäße Windenergieanlage 10, in diesem Fall eine Onshore-Windenergieanlage, die auf einem Untergrund 2 steht. Bei Offshore-Windenergieanlagen ist der Untergrund 2 unter Wasser, so dass ein Unterbau vorhanden ist, der im Untergrund 2 gegründet ist und oberhalb des Wasserspiegels endet. Auf diesem Unterbau ist dann ein Turm 20 errichtet.

Bei der in Fig. 1 gezeigten Onshore-Windenergieanlage ist der oberflächliche Teil einer Gründung 5 bzw. eines Fundaments auf dem Untergrund 2 erkennbar, auf dem ein Turm 20 mit fünf Turmsektionen 22 errichtet ist, von der in Fig. 1 die oberste Turmsektion mit dem Bezugszeichen 24 versehen ist. Die Höhe der einzelnen Turmsektionen 22, 24 nimmt von unten nach oben zu. Der Turm 20 kann sich nach oben hin verjüngen, einen konstanten Durchmesser oder auch Knickstellen in der Kontur aufweisen, d.h. dass der Turm so ausgeführt ist, dass er nach einer Verjüngung im unteren Bereich sich im oberen Bereich nach oben hin aufweitet. Dies ist besonders vorteilhaft, wenn in einem relativ schlanken Turm ausreichend Platz für den Einbau eines Schwingungsdämpfers geschaffen wird. An der Spitze des Turms 20 ist ein Maschinenhaus 40 angeordnet, wobei Fig. 1 eine Seitenansicht des Maschinenhauses 40 mit einem Rotor 30 zeigt, der eine Rotornabe 32 mit einer auch "Spinner" genannten Abdeckung und drei Rotorblätter 34 aufweist. In der Seitenansicht ist das obere Rotorblatt 34 in voller Länge zu sehen, von den zwei um 120° versetzt angeordneten Rotorblättern 34 ist nur das nähere perspektivisch verkürzt sichtbar, das das in der Bildebene dahinter angeordnete dritte Rotorblatt verdeckt.

Im oberen Teil der obersten Turmsektion 24 unterhalb des Maschinenhauses 40 ist ein Schwingungsdämpfer 70 zwischen einer Dämpfer-Plattform 28 und einer Aufstiegplattform 29 angeordnet, die einen Aufstieg in die Gondel bzw. das Maschinenhaus 40 ermöglicht. Der Schwingungsdämpfer 70 dämpft Turmschwingungen während des Betriebs der Windenergieanlage 10.

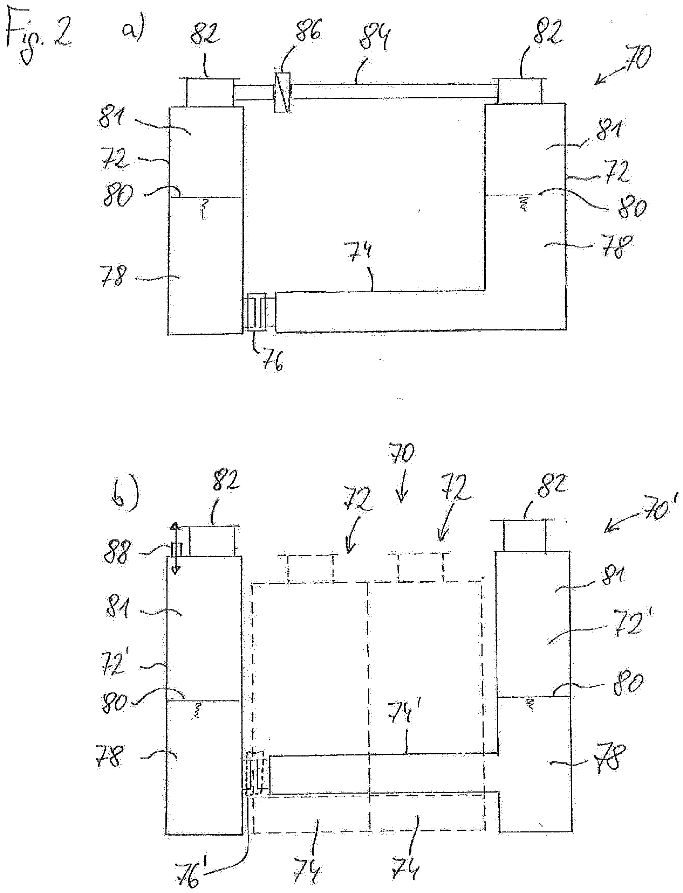

In Fig. 2a) und 2b) sind schematische Darstellungen erfindungsgemäßer Schwingungsdämpfer in Form von TLCD-Schwingungsdämpfern 70, 70' gezeigt.

Der in Fig. 2a) gezeigte TLCD-Schwingungsdämpfer 70 weist zwei Steigrohre 72 bzw. Steigrohr-Behälter als Einzelteile mit vertikaler Längsachse auf, die durch ein Horizontalrohr 74 mit horizontaler Längsachse im unteren Bereich miteinander verbunden sind. In der gezeigten Ausführungsform ist ein Steigrohr-Behälter fest mit dem Horizontalrohr verschweißt und wird erst im Turm mittels einer Rohrkupplung 76 mit dem anderen Steigrohr-Behälter verbunden. Die Steigrohre 72 und das Horizontalrohr 74 bilden zusammen ein im Wesentlichen "U"-förmiges Rohr, das mit Salzwasser 78 teilweise gefüllt ist. Wenn der TLCD-Schwingungsdämpfer 70 in einem schwingenden Turm 10 oder einem schwingenden Turmrohbau eingebaut ist, wird die Wassersäule in Schwingung gesetzt, so dass die Pegel 80 des Salzwassers 78 in den beiden Steigrohren 72 gegenläufig steigen und fallen. Die gegenüber einem Schwappdämpfer geringere Flüssigkeitsmenge wird durch eine höhere Amplitude bzw. einen höheren Hub des Salzwassers 78 in den Steigrohren 72 ausgeglichen.

Oberhalb des Salzwassers 78 befinden sich Luftvolumen bzw. Luftsäulen 81 in den Steigrohren 72. Wenn diese zur Außenluft hin abgeschlossen sind, ergibt sich ein Luftfedereffekt, wobei die Komprimierung der Luft in der Luftsäule 81 bei steigendem Pegel 80 eine rücktreibende Kraft auf die Oberfläche des Wassers 78 ausübt. Wenn die Luftsäule 81 auf der gegenüberliegenden Seite ebenfalls abgeschlossen ist, ergibt sich bei dort fallendem Pegel ein Unterdruck, also eine Kraft, die das Wasser 78 wieder nach oben saugt. Dieser Luftfedereffekt, der der Schwingungsrichtung des Salzwassers 78 entgegengesetzt ist, erhöht die Schwingungsfrequenz.

Im oberen Teil der Steigrohre 72 sind Mannlöcher 82 zum Ein- und Ausstieg in die Steigrohre 72 vorhanden, die im normalen Betrieb vorzugsweise verschlossen sind, um zu verhindern, dass das Salzwasser 78 im Laufe der Jahre des Betriebs der Windenergieanlage 10 durch Verdunstung verloren geht. Die Luftsäulen 81 in den Steigrohren 72 sind in diesem Ausführungsbeispiel mit einem Verbindungsrohr 84 miteinander verbunden, in dem eine Absperrklappe 86 angeordnet ist. Wenn die Absperrklappe 86 geöffnet ist, sind die Luftsäulen 81 der beiden Steigrohre 72 miteinander verbunden und es baut sich kein Luftfedereffekt auf. Wird die Absperrklappe 86 geschlossen, sind die Luftsäulen 81 voneinander getrennt und es bildet sich ein Luftfedereffekt in beiden Steigrohren 72. Durch Öffnen von Ventilen auf den jeweiligen Steigrohr-Behälter-Seiten ist eine Entlastung des Systems möglich.

Bei dem gezeigten Ausführungsbeispiel lässt sich der Luftfederdruck in mehreren Stufen regulieren. Im Endzustand der Windenergieanlage kann die Absperrklappe 86 im Verbindungsrohr 84 im Normalbetrieb geöffnet sein. Der Luftfedereffekt entfällt somit vollständig. Beim Schließen der Absperrklappe 86 kann ein Steigrohr 72, 72' offen bleiben und das andere, das dann ein Druckentlastungsventil 88 benötigt, verschlossen sein, so dass ein einseitiger Luftfedereffekt entsteht. Das Öffnen eines Steigrohrs kann bspw. durch Öffnen eines Ventils mit ausreichend großem Querschnitt erfolgen. In einer weiteren Verstärkung können beide Steigrohre 72, 72' verschlossen werden und gegebenenfalls mit Druckentlastungsventilen ausgestattet sein oder werden. Es ergibt sich in diesem Fall ein stärkerer, weil beidseitiger, Luftfedereffekt.

Fig. 2b) zeigt ein weiteres Ausführungsbeispiel eines TLCD-Schwingungsdämpfers 70'. Dieser unterscheidet sich von dem TLCD-Schwingungsdämpfer 70 aus Fig. 2a) vor allem dadurch, dass kein Verbindungsrohr 84 zwischen den Steigrohren 72' vorhanden ist, dafür allerdings wenigstens ein Steigrohr 72' ein Überdruckventil 88 an seiner Oberseite aufweist, das sich bei Ausbildung eines zu hohen Überdrucks in der Luftsäule 72' öffnet.

Wie in Fig. 2b) weiter zu erkennen ist, kann der TLCD-Schwingungsdämpfer 70' mit einem oder zwei TLCD-Schwingungsdämpfern 70 kreuzweise kombiniert werden. So wird durch Linearkombination eine Schwingungsdämpfung für Schwingungen in unterschiedlichen Richtungen realisiert. Um die Kreuzung der Horizontalrohre 74, 74' zu bewerkstelligen, sind diese vertikal gestaffelt angeordnet. Die wirksame Gesamthöhe der Steigrohre 72 ist die gleiche wie die der Steigrohre 72', da in letzteren das Volumen unterhalb der Unterkante des Horizontalrohrs 74' nicht an der Schwingung teilnimmt. Dieser untere Teil erhöht jedoch die Standfestigkeit des TLCD-Schwingungsdämpfers 70'. Bei Ausführungsformen, in denen beide TLCDs Luftrohre bzw. Verbindungsrohre aufweisen, sind diese, ähnlich wie die Horizontalrohre, gekreuzt und vertikal gestaffelt angeordnet.

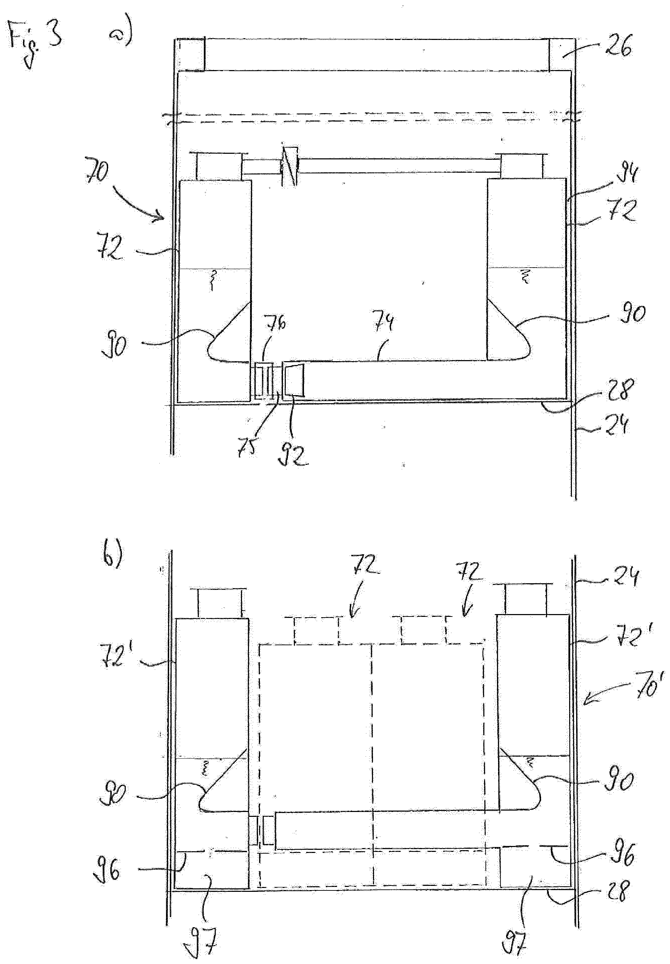

In Fig. 3a) und 3b) ist der erfindungsgemäße Schwingungsdämpfer aus Fig. 2 mit weiteren Details und in einem Turm eingesetzt, insbesondere in eine obere Turmsektion 24, die an ihrem oberen Ende mit einem Turmkopfflansch 26 abgeschlossen ist. Von der Darstellung in Fig. 2 unterscheidet sich die Darstellung in Fig. 3 dadurch, dass zusätzlich Anbauelemente, nämlich Nasenelemente 90 und ein Strömungsanpassungselement 92 dargestellt sind, die eine Anpassung der verschiedenen Querschnitte einerseits aus dem Steigrohr 72 in das horizontale Rohr 74 mittels der Nasen 90 und andererseits im Bereich der Kupplung durch das Strömungsanpassungselement 92 durchführen. Das Strömungsanpassungselement 92 passt den eckigen Querschnitt des horizontalen Rohrs 94 an den runden Querschnitt des Verbindungsrohrs 75 an, das mittels einer Kupplung 76 mit dem entgegengesetzten Verbindungsrohr des zweiten Steigrohrs 72 verbunden ist. Hier wird ein eckiger auf einen runden Querschnitt angepasst.

Im oberen Bereich von Fig. 3a) ist durch gestrichelte horizontale Linien angedeutet, dass der Abschnitt mit der Aufstiegsplattform 29 aus Fig. 1 der Übersicht halber ausgelassen worden ist.

Die Übergangselemente in Fig. 3a) sorgen dafür, dass durch den allmählichen Querschnittswechsel eine graduelle Art "Impedanzanpassung" erfolgt, die die Bildung von Turbulenzen verhindert und somit einen Energieverlust der Schwingung minimiert.

Die Fig. 3b) zeigt die entsprechende Ansicht zur Fig. 2b). Auch in dem oberen TLCD 70' sind entsprechende Nasen 90 eingesetzt. Außerdem ist in Fig. 3b) zu erkennen, dass die Steigrohre 72' im unteren Bereich Standvolumen 97 aufweisen, die ebenfalls mit Salzwasser gefüllt sind und durch ein Blech 96 mit Öffnungen jeweils vom übrigen Teil der schwingenden Wassersäule abgetrennt sind. Das Blech 96 verhindert dabei jeweils die Entstehung von Turbulenzen. Die Standvolumen 97, die flüssigkeitsgefüllt sind, sorgen für einen sicheren Stand des oberen TLCD 70' und machen die Konstruktion einer aufwändigen Stützkonstruktion überflüssig.

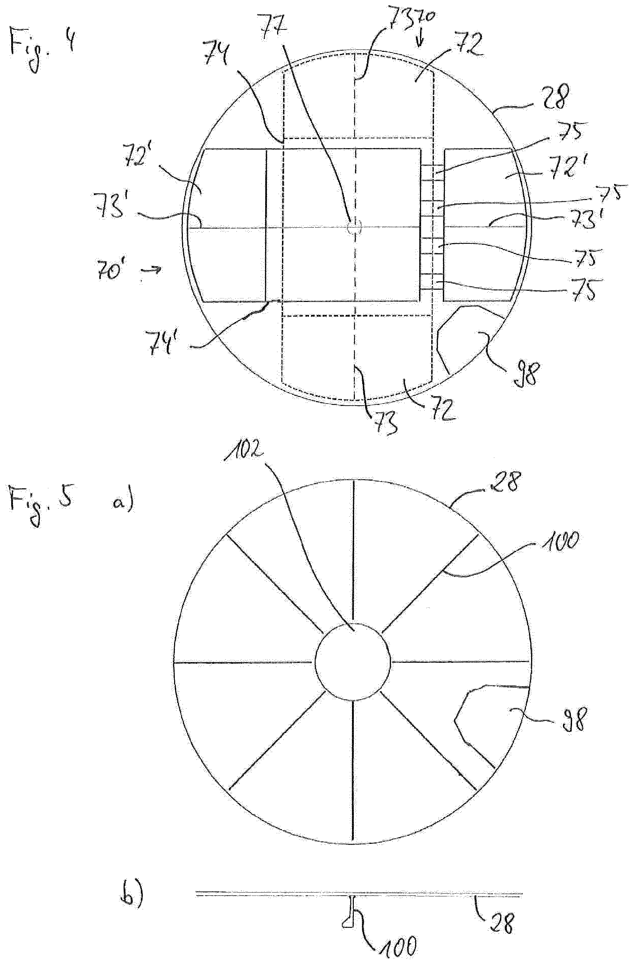

Fig. 4 zeigt schematisch eine Draufsicht auf einen erfindungsgemäßen Schwingungsdämpfer mit zwei kreuzweise angeordneten TLCD-Schwingungsdämpfern 70 und 70'. Der "untere" TLCD-Schwingungsdämpfer 70 ist gestrichelt dargestellt mit Steigrohren 72 und horizontalem Rohr 74. Außerdem ist ein Schottblech 73 dargestellt, das den TLCD 70 vollständig in zwei, im Ausführungsbeispiel gleich große, Hälften auftrennt, die verschieden hoch befüllbar sind und somit verschiedene Dämpfungsfrequenzen haben. Entsprechend sind auch die Horizontalrohre durch Schottbleche voneinander getrennt, sodass keine Vermischung möglich ist.

Im Falle des "oberen" TLCD-Schwingungsdämpfers 70' sind ebenfalls die Behälter der Steigrohre 72' dargestellt sowie das horizontale Rohr 74', das ebenfalls durch eine Schottwand bzw. ein Schottblech 73' in zwei Teile aufgeteilt ist. In diesem Fall sind zur Verbindung der Einzelteile noch vier Verbindungsrohre 75 mit rundem Querschnitt dargestellt, die die im Querschnitt rechteckigen horizontalen Rohre 74' mit dem rechts dargestellten Steigrohr 72' verbinden.

Im Zentrum ist eine Kabeldurchführungsöffnung 77 für alle durchzuführenden Kabel der Windenergieanlage dargestellt.

Der Schwingungsdämpfer sitzt auf einer in Fig. 5 näher dargestellten Dämpfer-Plattform 28 auf, die außerdem eine Aussparung 98 für einen Leiterdurchstieg in einer Ecke aufweist. Die Dämpfer-Plattform 28 ist rundum mit dem Turm verschweißt (nicht dargestellt).

Fig. 5a) zeigt eine schematische Ansicht der Unterseite einer erfindungsgemäßen Dämpfer-Plattform 28, die ein kreisringförmiges Flachprofil mit acht strahlenförmig radial angeordneten Verstärkungsstreben 100 aufweist. Die Aussparung 98 für einen Leiterdurchstieg ist ebenfalls gezeigt. Zentral weist die Dämpfer-Plattform 28 eine zentrale Kabeldurchführungsöffnung 102 auf, die mit der Kabeldurchführungsöffnung 77 des Schwingungsdämpfers fluchtet. Fig. 5b) zeigt die Plattform 28 und eine Strebe 100 im Querschnitt. Es handelt sich um ein sogenanntes Schiffsprofil oder Hollandprofil, das sich besonders einfach beschichten lässt.

Die Erfindung wird durch die beigefügten unabhängigen Ansprüche definiert, weitere erfindungsgemäße Ausführungsformen sind in den abhängigen Ansprüchen aufgeführt.

Im Rahmen der Erfindung sind Merkmale, die mit "insbesondere" oder "vorzugsweise" gekennzeichnet sind, als fakultative Merkmale zu verstehen.

### Bezuqszeichenliste

- 2: Untergrund
- 5: Gründung
- 10: Windenergieanlage
- 20: Turm
- 22: Turmsektion
- 24: oberste Turmsektion
- 26: Turmkopfflansch
- 28: Plattform
- 29: Aufstiegsplattform
- 30: Rotor
- 32: Rotornabe
- 34: Rotorblatt
- 40: Maschinenhaus
- 70, 70': TLCD-Schwingungsdämpfer
- 72, 72': Steigrohr
- 73, 73': Schottblech
- 74, 74': Horizontalrohr
- 75: Verbindungsrohr
- 76, 76': Rohrkupplung
- 77: Kabeldurchführungsöffnung
- 78: Salzwasser
- 80: Wasserpegel
- 81: Luftsäule
- 82: Mannloch
- 84: Verbindungsrohr
- 86: Absperrklappe
- 88: Druckentlastungsventil
- 90: Nasenelement
- 92: Strömungsanpassungselement
- 94: Spalt
- 96: Blech mit Öffnungen
- 97: Standvolumen
- 98: Aussparung für Leiterdurchstieg
- 100: Verstärkungsstrebe
- 102: zentrale Kabeldurchführungsöffnung

## Patentansprüche

1. Schwingungsdämpfer für eine Windenergieanlage (10) mit einem auf einem Turm (20) der Windenergieanlage (10) angeordneten Maschinenhaus (40) und einem Rotor (30) mit wenigstens einem Rotorblatt (34), wobei der Schwingungsdämpfer wenigstens einen im Wesentlichen "U-"förmigen Tuned Liquid Column Dämpfer (TLCD) (70, 70') mit Steigrohren (72, 72') und einem Horizontalrohr (74, 74') zur Aufnahme einer Flüssigkeit aufweist, wobei der TLCD (70,70') aus mehreren Einzelteilen besteht, die in einem Turm (20) einer Windenergieanlage (10) zum TLCD (70, 70') zusammensetzbar oder zusammengesetzt sind, wobei jeweils zwei der Einzelteile des TLCDs (70, 70') jeweils ein Steigrohr (72, 72') umfassen, **dadurch gekennzeichnet, dass** als Rohrverbindungen (75) mit Kupplungen (76, 76') ausgebildete Verbindungsmittel (75, 76, 76') umfasst sind, mit denen die Einzelteile jedes TLCD jeweils durch Zusammensetzen der Rohrverbindungen (75) mittels jeweils einer Kupplung (76, 76') miteinander verbindbar oder verbunden sind.

2. Schwingungsdämpfer nach Anspruch 1, **dadurch gekennzeichnet, dass** wenigstens zwei TLCDs (70, 70') umfasst sind, die insbesondere in einer gekreuzten Anordnung zueinander angeordnet sind, wobei insbesondere bei gekreuzten TLCDs (70, 70') ein TLCD (70') um eine Differenzhöhe höher steht als ein anderer TLCD (70), wobei insbesondere der höher stehende TLCD (70') in einem unteren Bereich seiner Steigrohre (72') ein, insbesondere mittels einer Bodenplatte mit Loch oder Löchern abgetrenntes, Standvolumen (97) aufweist, das unterhalb einer Unterkante des Horizontalrohrs (74') liegt.

3. Schwingungsdämpfer nach Anspruch 1 oder 2, **dadurch gekennzeichnet, dass** ein Horizontalrohr (74, 74') eines TLCDs (70, 70') als Einzelteil oder, ganz oder teilweise, als Teil eines oder beider Steigrohr-Einzelteile ausgebildet ist.

4. Schwingungsdämpfer nach einem der Ansprüche 1 bis 3, **dadurch gekennzeichnet, dass** die Steigrohre (72, 72') als Behälter mit gebogener Rückwand ausgebildet sind, deren Biegung an eine Innenwand eines Turms (20) einer Windenergieanlage (10) angepasst ist, wobei insbesondere im eingesetzten Zustand ein Spalt zwischen der gebogenen Rückwand eines Behälters und der Innenseite des Turms (20) verbleibt, der mit einer aushärtenden Befestigungsmasse verfüllbar ist oder verfüllt wird.

5. Schwingungsdämpfer nach einem der Ansprüche 1 bis 4, **dadurch gekennzeichnet, dass** die TLCDs (70, 70') als jeweils geschlossene Systeme oder als gemeinsam geschlossenes System ausgebildet sind.

6. Schwingungsdämpfer nach einem der Ansprüche 1 bis 5, **dadurch gekennzeichnet, dass** Luftvolumen (81) in den Steigrohren (72, 72') eines TLCDs (70, 70') oder mehrerer TLCDs (70, 70') mit einem Verbindungsrohr (84) miteinander verbunden sind, das insbesondere radial zum Turm (20) geführt ist.

7. Schwingungsdämpfer nach einem der Ansprüche 1 bis 6, **dadurch gekennzeichnet, dass** die Steigrohre (72, 72') und das wenigstens eine Horizontalrohr (74, 74') des wenigstens einen TLCDs (70, 70') in zwei oder mehrere parallele Kammern unterteilt sind, insbesondere mittels vollständig geschlossener Leitwände und/oder Schottbleche (73, 73').

8. Schwingungsdämpfer nach einem der Ansprüche 1 bis 7, **dadurch gekennzeichnet, dass** zur Einstellung einer Dämpfungsfrequenz eines TLCDs (70, 70') ein Luftfedereffekt einer Luftsäule (81) in wenigstens einem Steigrohr (72, 72') des Schwingungsdämpfers (70, 70') verringert oder erhöht wird, insbesondere durch Öffnen oder Schließen eines Ventils (88) im Steigrohr (72, 72') oder einer Absperrklappe (86) in einem Verbindungsrohr (84).

9. Schwingungsdämpfer nach einem der Ansprüche 1 bis 8, **dadurch gekennzeichnet, dass** turbulenzverringernde Einbauteile in wenigstens einem TLCD (70, 70') eingesetzt sind oder werden, insbesondere Nasenelemente (90) und/oder Strömungsanpassungselemente (92), insbesondere Ausrundungen oder Übergangsstücke zum Übergang von eckigen zu runden Querschnitten.

10. Schwingungsdämpfer nach einem der Ansprüche 1 bis 9, **dadurch gekennzeichnet, dass** eine Dämpfer-Plattform (28) umfasst ist, die im Turm (20) einer Windenergieanlage (10) eingebaut oder einbaubar, insbesondere schweißbar, ist und das Gewicht des Schwingungsdämpfers aufnimmt, wobei die Dämpfer-Plattform (28) insbesondere mit mehreren, insbesondere radial angeordneten, Trägern mit Trägerprofil, insbesondere Schiffsbauprofil, verstärkt ist.

11. Verfahren zum Einbau eines Schwingungsdämpfers, nach einem der Ansprüche 1 bis 10, in einem Turm (20) einer Windenergieanlage (10), wobei der Schwingungsdämpfer in Einzelteilen in den Turm (20) transportiert und positioniert wird, wobei die Einzelteile im Turm (20) durch Zusammensetzen von Rohrverbindungen (75) mittels jeweils einer Kupplung (76, 76') zu wenigstens einem TLCD (70, 70') zusammengesetzt und miteinander verbunden werden.

12. Verfahren nach Anspruch 11, **dadurch gekennzeichnet, dass** nach dem Verbinden der Einzelteile miteinander zum wenigstens einen TLCD (70, 70') der wenigstens eine TLCD (70, 70') fest mit dem Turm (20) verbunden wird, insbesondere durch Verfüllen von Spalten zwischen einer Turm-Innenwandfläche und Rückseiten der als Behälter ausgebildeten Steigrohre (72, 72') mit einer aushärtenden Verbindungsmasse.

13. Verfahren nach Anspruch 11 oder 12, **dadurch gekennzeichnet, dass** vor dem Einsatz der Einzelteile eine Dämpfer-Plattform (28) im Turm (20) installiert wird, wobei zunächst ein umlaufender Auflagering am Turm eingeschweißt wird und nachfolgend die Dämpfer-Plattform (28) von unten im Turm (20) auf den Auflagering positioniert wird und, insbesondere mit Kehlnähten, am Auflagering verschweißt wird, wobei insbesondere die Dämpfer-Plattform mit dem Turm zusammen beschichtet wird.

14. Windenergieanlage (10) mit einem Turm (20), einem Maschinenhaus (40) und einem Rotor (30) mit wenigstens einem Rotorblatt (34), **dadurch gekennzeichnet, dass** in einem oberen Bereich des Turms (20) ein Schwingungsdämpfer mit wenigstens einem TLCD (70, 70') nach einem der Ansprüche 1 bis 10 angeordnet ist und/oder ein Schwingungsdämpfer mit wenigstens einem TLCD (70, 70') in einem Verfahren nach einem der Ansprüche 11 bis 13 eingebaut ist.

## Claims

1. A vibration damper for a wind energy installation (10) comprising a nacelle (40) which is arranged on a tower (20) of the wind energy installation (10) and a rotor (30) comprising at least one rotor blade (34), wherein the vibration damper comprises at least one substantially "U"-shaped tuned liquid column damper (TLCD) (70, 70') comprising riser tubes (72, 72') and a horizontal tube (74, 74') for receiving a liquid, wherein the TLCD (70, 70') consists of a plurality of individual parts which can be assembled or are assembled in a tower (20) of a wind energy installation (10) so as to form the TLCD (70, 70'), wherein each two of the individual parts of the TLCD (70, 70') each comprise a riser tube (72, 72'), **characterised in that** the vibration damper comprises connecting means (75, 76, 76') which are constructed in the form of tube connections (75) with couplings (76, 76'), with which connecting means (75, 76, 76') each of the individual parts of each TLCD can be connected or are connected to one another by assembling the pipe connections (75) by means of a coupling (76, 76') in each case.

2. The vibration damper according to claim 1, **characterised in that** the vibration damper comprises at least two TLCDs (70, 70'), which are arranged in particular in a crosswise arrangement with respect to one another, wherein, in particular in the case of a crosswise arrangement of TLCDs (70, 70'), one TLCD (70') stands higher than another TLCD (70) by a differential height, wherein in particular the higher TLCD (70') has, in a lower region of its riser tubes (72'), a standing volume (97) which is separated in particular by means of a base plate with a hole or holes and which lies below a lower edge of the horizontal tube (74').

3. The vibration damper according to claim 1 or 2, **characterised in that** a horizontal tube (74, 74') of a TLCD (70, 70') is constructed in the form of an individual part or, wholly or partly, as part of one or both of the individual riser tube parts.

4. The vibration damper according to any one of the claims 1 to 3, **characterised in that** the riser tubes (72, 72') are constructed in the form of a container with a curved rear wall, the curvature of which is adapted to an inner wall of a tower (20) of a wind energy installation (10), wherein, in particular in the inserted state, a gap remains between the curved rear wall of a container and the inner side of the tower (20), which gap can be filled, or is filled, with a hardening fixing compound.

5. The vibration damper according to any one of the claims 1 to 4, **characterised in that** each of the TLCDs (70, 70') is constructed in the form of a closed system, or that the TLCDs (70, 70'), jointly, are constructed in the form of a closed system.

6. The vibration damper according to any one of the claims 1 to 5, **characterised in that** volumes of air (81) in the riser tubes (72, 72') of a TLCD (70, 70') or of several TLCDs (70, 70') are connected to one another by a connecting tube (84) which, in particular, runs radially with respect to the tower (20).

7. The vibration damper according to any one of the claims 1 to 6, **characterised in that** the riser tubes (72, 72') and the at least one horizontal tube (74, 74') of the at least one TLCD (70, 70') are subdivided into two or more parallel chambers, in particular by means of completely closed guide walls and / or partitioning plates (73, 73').

8. The vibration damper according to any one of the claims 1 to 7, **characterised in that**, in order to set a damping frequency of a TLCD (70, 70'), an air spring effect of a column of air (81) in at least one riser tube (72, 72') of the vibration damper (70, 70') is reduced or increased, in particular by opening or closing a valve (88) in the riser tube (72, 72') or a butterfly valve (86) in a connecting tube (84).

9. The vibration damper according to any one of the claims 1 to 8, **characterised in that** turbulence-reducing installation components are inserted in at least one TLCD (70, 70'), in particular nose elements (90) and / or flow adjustment elements (92), in particular fillets or transition pieces for the transition from angular cross sections to round cross sections.

10. The vibration damper according to any one of the claims 1 to 9, **characterised in that** the vibration damper comprises a damper platform (28), which is installed or can be installed, in particular which can be welded, in the tower (20) of a wind energy installation (10) and which supports the weight of the vibration damper, wherein the damper platform (28) is reinforced, in particular with a plurality of beams having a beam profile, in particular a shipbuilding profile, in particular a plurality of beams which are arranged radially and which have a beam profile, in particular a shipbuilding profile.

11. A method of installing a vibration damper according to any one of the claims 1 to 10 in a tower (20) of a wind energy installation (10), wherein the vibration damper is transported into the tower (20) and positioned in the tower (20) in individual parts, wherein the individual parts are assembled and connected to one another in the tower (20) by assembling pipe connections (75), in each case by means of a respective coupling (76, 76'), so as to form at least one TLCD (70, 70').

12. The method according to claim 11, **characterised in that**, after the individual parts have been connected to one another to form the at least one TLCD (70, 70'), the at least one TLCD (70, 70') is firmly connected to the tower (20), in particular by filling gaps between an inner wall surface of the tower and rear sides of the riser tubes (72, 72'), formed as containers, with a hardening connecting compound.

13. The method according to claim 11 or 12, **characterised in that** a damper platform (28) is installed in the tower (20) prior to the use of the individual parts, wherein first a circumferential support ring is welded to the tower, and subsequently the damper platform (28) is positioned on the support ring in the tower (20) from below and is welded, in particular with fillet welds, to the support ring, in particular wherein the damper platform is coated together with the tower.

14. A wind energy installation (10) comprising a tower (20), a nacelle (40) and a rotor (30) comprising at least one rotor blade (34), **characterised in that** a vibration damper comprising at least one TLCD (70, 70') according to any one of the claims 1 to 10 is arranged in an upper region of the tower (20), and / or a vibration damper comprising at least one TLCD (70, 70') is installed in an upper region of the tower (20) by means of a method according to any one of the claims 11 to 13.

## Revendications

1. Amortisseur d'oscillations pour une éolienne (10) avec une nacelle (40) agencée sur une tour (20) de l'éolienne (10) et un rotor (30) avec au moins une pale de rotor (34), dans lequel l'amortisseur d'oscillations présente au moins un amortisseur Tuned Liquid Column (TLCD) (70, 70') sensiblement en forme de « U » avec des tubes ascendants (72, 72') et un tube horizontal (74, 74') pour la réception d'un liquide, dans lequel le TLCD (70, 70') se compose de plusieurs pièces individuelles, qui peuvent être assemblées ou sont assemblées dans une tour (20) d'une éolienne (10) pour former le TLCD (70, 70'), dans lequel respectivement deux des pièces individuelles du TLCD (70, 70') comprennent respectivement un tube ascendant (72, 72'), **caractérisé en ce que** des moyens de liaison (75, 76, 76') réalisés en tant que raccords de tubes (75) avec des accouplements (76, 76') sont compris, avec lesquels les pièces individuelles de chaque TLCD peuvent être reliées ou sont reliées les unes aux autres respectivement par assemblage des raccords de tubes (75) au moyen de respectivement un accouplement (76, 76').

2. Amortisseur d'oscillations selon la revendication 1, **caractérisé en ce qu'**au moins deux TLCD (70, 70') sont compris, qui sont agencés l'un par rapport à l'autre en particulier dans un agencement croisé, dans lequel en particulier dans le cas de TLCD (70, 70') croisés, un TLCD (70') est situé plus haut d'une hauteur de différence qu'un autre TLCD (70), dans lequel en particulier le TLCD (70') situé plus haut présente dans une zone inférieure de ses tubes ascendants (72') un volume de support (97), séparé en particulier au moyen d'une plaque de base avec trou ou trous, qui se trouve en-dessous d'un bord inférieur du tube horizontal (74').

3. Amortisseur d'oscillations selon la revendication 1 ou 2, **caractérisé en ce qu'**un tube horizontal (74, 74') d'un TLCD (70, 70') est réalisé en tant que pièce individuelle ou, tout ou partie, en tant que partie d'une ou des deux pièces individuelles de tube ascendant.

4. Amortisseur d'oscillations selon l'une quelconque des revendications 1 à 3, **caractérisé en ce que** les tubes ascendants (72, 72') sont réalisés en tant que récipient avec paroi arrière courbe, dont la courbure est adaptée à une paroi intérieure d'une tour (20) d'une éolienne (10), dans lequel en particulier à l'état inséré il reste une fente entre la paroi arrière courbe d'un récipient et le côté intérieur de la tour (20), qui peut être remplie ou est remplie d'une masse de fixation durcissable.

5. Amortisseur d'oscillations selon l'une quelconque des revendications 1 à 4, **caractérisé en ce que** les TLCD (70, 70') sont réalisés en tant que systèmes respectivement fermés ou en tant que système fermé conjointement.

6. Amortisseur d'oscillations selon l'une quelconque des revendications 1 à 5, **caractérisé en ce que** des volumes d'air (81) dans les tubes ascendants (72, 72') d'un TLCD (70, 70') ou de plusieurs TLCD (70, 70') sont reliés les uns aux autres avec un tube de liaison (84), qui est guidé en particulier radialement par rapport à la tour (20).

7. Amortisseur d'oscillations selon l'une quelconque des revendications 1 à 6, **caractérisé en ce que** les tubes ascendants (72, 72') et l'au moins un tube horizontal (74, 74') de l'au moins un TLCD (70, 70') sont subdivisés en deux ou plusieurs chambres parallèles, en particulier au moyen de parois de guidage et/ou tôles de cloisonnement (73, 73') entièrement fermées.

8. Amortisseur d'oscillations selon l'une quelconque des revendications 1 à 7, **caractérisé en ce que** pour le réglage d'une fréquence d'amortissement d'un TLCD (70, 70') un effet de ressort pneumatique d'une colonne d'air (81) dans au moins un tube ascendant (72, 72') de l'amortisseur d'oscillations (70, 70') est diminué ou augmenté, en particulier par ouverture ou fermeture d'une soupape (88) dans le tube ascendant (72, 72') ou d'un clapet d'arrêt (86) dans un tube de liaison (84).

9. Amortisseur d'oscillations selon l'une quelconque des revendications 1 à 8, **caractérisé en ce que** des pièces de montage réduisant les turbulences sont ou seront insérées dans au moins un TLCD (70, 70'), en particulier des éléments de nez (90) et/ou éléments d'adaptation d'écoulement (92), en particulier des congés ou pièces de transition pour le passage de sections transversales angulaires à rondes.

10. Amortisseur d'oscillations selon l'une quelconque des revendications 1 à 9, **caractérisé en ce qu'**une plateforme d'amortisseur (28) est comprise, qui est montée ou peut être montée, en particulier peut être soudée, dans la tour (20) d'une éolienne (10) et reçoit le poids de l'amortisseur d'oscillations, dans lequel la plateforme d'amortisseur (28) est renforcée en particulier avec plusieurs supports avec profil de support, en particulier profil de construction navale, agencés en particulier radialement.

11. Procédé de montage d'un amortisseur d'oscillations, selon l'une quelconque des revendications 1 à 10, dans une tour (20) d'une éolienne (10), dans lequel l'amortisseur d'oscillations est transporté et positionné en pièces individuelles dans la tour (20), dans lequel les pièces individuelles sont assemblées et reliées les unes aux autres dans la tour (20) par assemblage de raccords de tubes (75) au moyen de respectivement un accouplement (76, 76') pour former au moins un TLCD (70, 70').

12. Procédé selon la revendication 11, **caractérisé en ce qu'**après la liaison des pièces individuelles les unes aux autres pour former au moins un TLCD (70, 70'), l'au moins un TLCD (70, 70') est relié solidement à la tour (20), en particulier par remplissage de fentes entre une surface de paroi intérieure de tour et des faces arrière des tubes ascendants (72, 72') réalisés en tant que récipient avec une masse de liaison durcissable.

13. Procédé selon la revendication 11 ou 12, **caractérisé en ce qu'**avant l'utilisation des pièces individuelles, une plateforme d'amortisseur (28) est installée dans la tour (20), dans lequel une bague d'appui circonférentielle est d'abord soudée sur la tour et ensuite la plateforme d'amortisseur (28) est positionnée par le bas dans la tour (20) sur la bague d'appui et est soudée sur la bague d'appui, en particulier avec des soudures d'angle, dans lequel en particulier la plateforme d'amortisseur est revêtue conjointement avec la tour.

14. Éolienne (10) avec une tour (20), une nacelle (40) et un rotor (30) avec au moins une pale de rotor (34), **caractérisée en ce qu'**un amortisseur d'oscillations avec au moins un TLCD (70, 70') selon l'une quelconque des revendications 1 à 10 est agencé dans une zone supérieure de la tour (20) et/ou un amortisseur d'oscillations avec au moins un TLCD (70, 70') est monté dans un procédé selon l'une quelconque des revendications 11 à 13.
